# EUROPEAN PATENT APPLICATION

(11) **EP 1 990 316 A1**
(43) Date of publication of application: **12.11.2008**
(21) Application number: 06830877.4
(22) Date of filing: 13.10.2006
(51) Int. Cl.: C02F 1/04

(54) **SYSTEM FOR THE DESALINATION AND RECYCLING OF OILY WATER AND LIQUID WASTE, WHICH DOES NOT USE FILTERS, MEMBRANES OR CHEMICAL PRODUCTS IN ORDER TO PRODUCE PURE WATER AND ENERGY**

(30) Priority: 17.10.2005 ES 200502531
(71) Applicant: Mora Wold Water, S.A., 38003 Santa Cruz de Tenerife (ES)
(72) Inventor: MORA VALLEJO, Nicasio Paulino, E-13670 Villarrubia de los Ojos (ES)
(74) Representative: Plaza Fernandez-Villa, Luis
(86) International application number: PCT/ES2006/000569
(87) International publication number: WO 2007/045708

(57) **Abstract**

The desalinisation and recycling system of liquid waste and oily waters, which does not employ filters, membranes or chemical products to produce pure water and energy, consists of a closed-circuit machine through which waste water is introduced and subjected to an evaporation process, recovering the concentrated material (non-evaporated) and producing clean water and energy.

## Description

This descriptive fact sheet makes reference to a desalinisation and recycling system of liquid waste and oily waters, which does not employ filters, membranes or chemical products to produce pure water and energy, with a salinity level below 0.1 p.p.m. based on saline or sea water. It separates metals, minerals and contaminants, such as nitrate, arsenic and other particles from water, with a high efficiency level, enables the balancing of the pH in the water produced, the treatment of contaminant combustion gases and obtains a significant amount of energy from the contaminant particles dissolved in the waste (cold fusion), enabling its recovery as thermal energy.

The desalinization and recycling system of liquid waste and oily waters, with all its equipment, is housed in an enclosure of adequate geometry for withstanding atmospheric pressure in the event of wishing to operate at very low temperatures and thus accelerating the evaporation process of the waste introduced in the evaporation chamber (2). Likewise, the enclosure is adequately insulated and protected to withstand corrosion that may be produced by the evaporation of the waste to be treated in the evaporation chamber (2). The pressure is regulated by means of an external turbine (6).

The waste or liquid to be recycled (1) arrives at the evaporation chamber (2) where it evaporates at low temperatures (below 94ºC). Once in a vapour state, the gas travels to the waste separator (3) where the particles that contaminate the vapour and have a higher density than the vapour are separated, continuing along the path to the vapour cleaner (4) where the particles that are of equal density to the water vapour molecule but that contaminate the vapour are separated (sometimes, due to the type of waste that evaporates, it is necessary to place 2 or more vapour cleaners in a sequence. Subsequent to the vapour cleaner, the vapour travels to a turbine (5) that pushes the vapour to the condenser (7) where large part of the vapour turns to water which is then pumped by an adequate flow pump to the reuse or consumption deposit (9), part of the cold vapour that does not condense travels to the exciter turbine (8) which pushes it to the evaporation chamber once again(2), and the rest of the non-condensed gas travels directly to the evaporation chamber where it is recharged once again with water vapour, following the closed-cycle circuit.

Thereby obtaining crystal water, in a pure state, in the case of desalinisation and many other liquid waste recycling processes (9), concentrated material for reuse (10).

The thermal energy Lᵥ is supplied by the coils of the evaporation chamber from the exterior and it is recovered at the outlet of the condenser's secondary circuit (7) as L_{c}, therefore Q = Lᵥ-L_{c} = -5% minimum.

To arrive at the above conclusion, various tests were performed. In the first tests, a flow meter system was placed at the hot water inlet of the machine, as well as temperature probes at the hot water inlet and at the backflow of the evaporation chamber's coils (2), whilst, at the same time, a flow meter was placed at the cold water inlet of the condenser as well as probes to measure the inflowing cold water and the water heated by the condenser's secondary circuit (7), and it was thus verified, through a computer programme that operates the automated control of the machine that, in effect, in all the tests performed throughout 4 days of machine operation, that the balance was very positive and that the sum of the machine's electric and thermal consumption was below the amount of energy produced.

Other tests that also lasted various days consisted of desalinising water from the Mediterranean Sea. Various chemical elements were analysed to verify whether they indeed concentrated adequately in the chamber or whether some of them transformed, and it was thus verified that phosphates concentrated to a much lesser degree than the amount that would be expected and that zinc, nitrate and aluminium practically disappeared, thereby the concentration parameters of practically all the elements in the produced water were lower than would be expected, with the exception of copper, which gave a similar result to that expected, whilst the thermal balance was very positive.

Other tests performed throughout various days consisted of leaving a high saline concentration in the chambers of the machine, with the most significant value standing at 142 g/litre, this time the inflow of liquid for recycling was pure water previously produced by the machine, after the machine had been producing water for several days and providing a positive energy balance. When the water remaining in the chambers was measured, the salt concentration did not exceed 80 g/litre in any case.

### FIELD OF THE INVENTION

This invention is for application in all the processes where the use of water is required, given that it enables its constant reuse, thereby exploiting the water and the materials that it carries, enabling the recycling work to be performed with a positive energy balance and the production of energy from the energy contained in the mass of particles that contaminate the water.

### BACKGROUND OF THE INVENTION

We have no news of any precedents to this invention. The only precedents are the patents held by this inventor, such as Invention Patent no. 9802192(3) "INSTALLATION FOR THE RECOVERY OF LIQUID WASTE, APPLICABLE IN INDUSTRIES FOR THE TREATMENT OF PARTS FOR ELECTROLYTIC BATH", Supplementary Certificate no. 9802374(8), "IMPROVEMENTS INTRODUCED TO INVENTION PATENT NO. 9802192(3) RELATING TO AN INSTALLATION FOR THE RECOVERY OF LIQUID WASTE, APPLICABLE IN INDUSTRIES FOR THE TREATMENT OF PARTS FOR ELECTROLYTIC BATH", Invention Patent no. 9900649 (9) "DEVICE FOR CLEANING A FLUID IN VAPOUR FORM STEMMING FROM A CIRCUIT", Invention Patent no. 9901029 (1) "TREATMENT SYSTEM FOR INDUSTRIAL WASTE WATERS THROUGH EVAPORATION, APPLICABLE FOR BALANCING THE PH AND ELIMINATING CONTAMINANT GASES", Supplementary Certificate no. 9902471 (3) "IMPROVEMENTS INTRODUCED TO INVENTION PATENT NUMBER 9901029, RELATING TO A TREATMENT SYSTEM FOR INDUSTRIAL WASTE WATERS THROUGH EVAPORATION, APPLICABLE IN BALANCING THE PH AND ELIMINATING CONTAMINANT GASES", Supplementary Certificate no. 990105313, "INSTALLATION FOR THE RECOVERY OF LIQUID WASTE APPLICABLE IN INDUSTRIES FOR THE TREATMENT OF PARTS FOR ELECTROLYTIC BATH" and Supplementary Certificate no. 200000366 (4) "SECOND IMPROVEMENTS INTRODUCED TO INVENTION PATENT NUMBER 9901029, RELATING TO A TREATMENT SYSTEM FOR INDUSTRIAL WASTE WATERS THROUGH EVAPORATION, APPLICABLE IN BALANCING THE PH AND ELIMINATING CONTAMINANT GASES".

### DESCRIPTION OF THE INVENTION

The desalinisation and recycling system of liquid waste and oily waters, which does not employ filters, membranes or chemical products to produce pure water and energy, consists of a closed-circuit machine to which waste water is introduced and subjected to an evaporation process, recovering the concentrated (non-evaporated) material and sending it from the chamber to the exterior as recovered material, and, on another front, passing the liquid in a vapour state through a turbine-driven waste separator and a vapour cleaner to a condenser, from which, part the vapour travels as produced water and the rest of the NON-CONDENSED vapour travels once again to the evaporation chamber for reuse, driven by a turbine. The pressure inside the precinct is regulated through a turbine which, from the exterior of the machine, acts upon its instructions.

### DESCRIPTION OF THE DRAWINGS

To complete this description and for the purpose of contributing towards a better comprehension of the characteristics of this invention, attached to this descriptive fact sheet, as an inseparable part of it, is a sheet containing illustrative and non-exhaustive drawings, to describe the following:
Figure number 1. - Represents a chamber (11), made up of a waste chamber (1), an evaporation chamber (2), a waste separator (3) a vapour cleaner (4), a turbine (5), a pressure regulator (6), a condenser (7), an exciter turbine (8), a reuse or consumption deposit (10) for reuse.

### PREFERRED EMBODIMENT OF THE INVENTION

If we follow the course of figure number 1, we can observe how inside the chamber (11) the waste or liquid to be recycled is introduced (1) which arrives at the evaporation chamber (2) where it evaporates at low temperature (below 94ºC), once in a vapour state, the gas travels to the waste separator (3) where the particles that contaminate the vapour and that are higher in density than the vapour are separated, continuing along the path until arriving at the vapour cleaner (4) where the particles that are of equal density to the water vapour molecules but that contaminate the vapour are separated (sometimes, due to the type of waste evaporated it is necessary to place 2 or more vapour cleaners in a sequence). Subsequent to the vapour cleaner, the vapour passes to a turbine (5) that pushes the vapour to the condenser (7) where a large part of the vapour turns to water which is pumped by an adequate flow pump to the reuse or consumption deposit (9), part of the cold vapour which does not condense travels to the turbine of the exciter (8) which pushes it once more to the evaporation chamber (2), and the rest of the non-condensed gas travels directly to the evaporation chamber where it is recharged once again with water vapour to continue along the closed-circuit cycle.

Thus obtaining crystal clear water, in a pure state in the case of desalinisation, as well as many other recycling processes of liquid waste (9) concentrated material for reuse.

The thermal energy Lᵥ is supplied by the coils of the evaporation chamber from the exterior and it is recovered at the outflow of the secondary circuit of the condenser (7) as L_{c}, thus Q=Lᵥ-L_{c} = -5% minimum.

We consider it unnecessary to make this description more extensive, given that any expert in the field will understand the scope of the invention and the advantages entailed.

The materials, shape, size and location of the elements will be subject to variation, provided that this does not alter the essence of the invention.

The terms employed in this descriptive fact sheet should be interpreted in a broad and non-exhaustive manner.

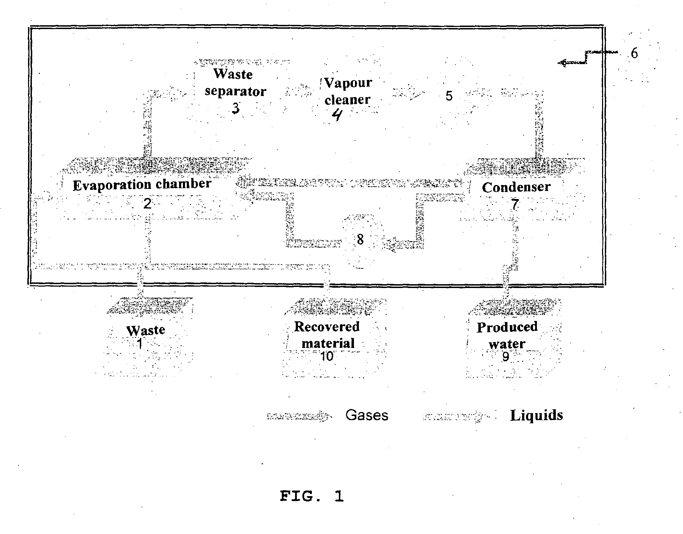

## Claims

1. Desalinisation and recycling system of liquid waste and oily waters, which does not employ filters, membranes or chemical products to produce pure water and energy, **characterised** for the fact that the waste or liquid to be recycled arrives at the evaporation chamber where it evaporates at low temperatures (below 94ºC). Once in a vapour state, the gas travels to the waste separator (3) where the particles that contaminate the vapour and that are higher in density than the vapour are separated, continuing along the path to the vapour cleaner.

2. Desalinisation and recycling system of liquid waste and oily waters, which does not employ filters, membranes or chemical products to produce pure water and energy, as per the first claim, **characterised** because the vapour travels to the turbine (5) which pushes the vapour to the condenser (7) where large part of the vapour turns to water, which is pumped out by an adequate flow pump to the reuse of consumption deposit.

3. Desalinisation and recycling system of liquid waste and oily waters, which does not employ filters, membranes or chemical products to produce pure water and energy, as per the above claims, **characterised** because part of the cold vapour that does not condense travels to the turbine of the exciter (8) which pushes it once again to the evaporation chamber (2) and the rest of the non-condensed gas travels directly to the evaporation chamber where it is recharged once again with water vapour, to continue along the closed-circuit cycle.

4. Desalinisation and recycling system of liquid waste and oily waters, which does not employ filters, membranes or chemical products to produce pure water and energy, as per the above claims, **characterised** because the thermal energy Lᵥ is supplied by the coils of the evaporation chamber from the exterior and it is recovered in the outflow of the secondary circuit of the condenser (7) as L_{c}, therefore, Q = Lᵥ - L_{c} = -5% minimum, generating the cold fusion.
